# EUROPÄISCHE PATENTSCHRIFT

(11) **EP 2 909 058 B1**
(45) Veröffentlichungstag und Bekanntmachung des Hinweises auf die Patenterteilung: **08.06.2016**
(21) Anmeldenummer: 13777230.7
(22) Anmeldetag: 04.10.2013
(51) Int. Cl.: B60L 11/18, B60K 1/04, B60L 3/00, H01M 2/12

(54) **KRAFTWAGEN MIT EINER BATTERIE**
MOTOR VEHICLE HAVING A BATTERY
VÉHICULE À MOTEUR POURVU D'UNE BATTERIE

(30) Priorität: 17.10.2012 DE 102012020299
(43) Veröffentlichungstag der Anmeldung: 26.08.2015
(73) Patentinhaber: Audi AG, 85045 Ingolstadt (DE)
(72) Erfinder: STADLER, Michael, 85110 Arnsberg (DE)
(74) Vertreter: Herbst, Matthias Heinz
(86) Internationale Anmeldenummer: PCT/EP2013/002989
(87) Internationale Veröffentlichungsnummer: WO 2014/060074

(56) Entgegenhaltungen:
- DE-A1-102008 006 026
- DE-A1-102009 045 271
- DE-A1-102010 010 844
- US-A1- 2008 299 445
- US-B1- 6 393 892

## Beschreibung

Die Erfindung betrifft einen Kraftwagen mit einer Batterie gemäß dem Oberbegriff von Patentanspruch 1.

Derartige Kraftwagen mit jeweils wenigstens einer Batterie sind aus dem allgemeinen Stand der Technik sowie aus dem Serienbau von Personenkraftwagen hinlänglich bekannt. Die Batterie dient zum Speichern von elektrischer Energie, mit welcher wenigstens ein elektrischer Verbraucher des Kraftwagens versorgt und dadurch betrieben werden kann.

Bei elektrifizierten Antriebssträngen beispielsweise von Elektrofahrzeugen oder Hybrid-Fahrzeugen ist ein solcher Verbraucher eine elektrische Maschine, welche zum Antreiben von Rädern des Personenkraftwagens dient. Die elektrische Maschine kann hierbei in einem Motorbetrieb die Räder beispielsweise alleinig oder zusammen mit einer Verbrennungskraftmaschine antreiben. Treibt die elektrische Maschine die Räder ohne Unterstützung der Verbrennungskraftmaschine an, so kann der Kraftwagen emissionslos fortbewegt werden. Beim unterstützenden Antreiben können ein besonders geringer Kraftverbrauch und somit geringe Emissionen und insbesondere CO₂-Emissionen realisiert werden.

Zum Speichern der elektrischen Energie umfasst die Batterie ein Gehäuse mit einem Aufnahmeraum. In dem Gehäuse ist ein beispielsweise zumindest im Wesentlichen flüssiger Elektrolyt der Batterie aufgenommen. Ferner sind in dem Gehäuse und in dem Elektrolyten Elektroden der Batterie aufgenommen.

Des Weiteren ist es bekannt, wenigstens ein Öffnungselement vorzusehen, mittels welchem bei Erfülltsein wenigstens einer vorgebbaren Bedingung wenigstens eine Austrittsöffnung im Gehäuse für den Elektrolyten ausbildbar ist. Eine solche Batterie mit einem solchen Öffnungselement ist beispielswei-se der DE 10 2009 015 687 A1 als bekannt zu entnehmen. Mittels des Öffnungselements kann das Gehäuse gezielt geöffnet werden, so dass die Entstehung eines unerwünscht hohen Drucks in dem Aufnahmeraum infolge einer beispielsweise unfallbedingten Fehlfunktion der Batterie vermieden werden kann. Hierdurch können auch aus dem unerwünscht hohen Druck resultierende, unerwünschte Effekte vermieden werden.

Auch aus der JP 2011-192523 A geht eine Batterie zum Speichern von elektrischer Energie mit einem Gehäuse mit einem Aufnahmeraum hervor. Der Batterie ist ein Öffnungselement zugeordnet, mittels welchem bei Erfülltsein wenigstens einer vorgebbaren Bedingung im Gehäuse wenigstens eine Austrittsöffnung für einen im Aufnahmeraum aufgenommenen Elektrolyten der Batterie ausbildbar ist.

Die DE 10 2010 049 611 A1 offenbart eine Batteriemoduleinheit für den Einsatz in Fahrzeugen, umfassend eine Mehrzahl von in Reihe geschalteten Einzelzellen. Des Weiteren ist eine Sicherheitseinrichtung zur Trennung einzelner Einzelzellen vorgesehen. Die Sicherheitseinrichtung umfasst eine Vielzahl von Trennmitteln zur Unterbrechung einer Verbindung zwischen zwei in Reihe geschalteten Einzelzellen, die derart angeordnet sind, dass die zwischen zwei derartigen Trennmitteln angeordneten Einzelzellen jeweils ein Untermodul bilden, wobei die Nennspannung eines einzelnen Untermoduls unterhalb einer kritischen Spannung liegt. Es ist eine Steuereinrichtung vorgesehen, die derart ausgebildet und/oder programmiert ist, ein Stellsignal zur Betätigung an alle Trennmittel gleichzeitig anzulegen.

Darüber hinaus ist es bekannt, bei solchen Batterien Maßnahmen zu ergreifen, um eine Beeinträchtigung der Lebensdauer der Batterie durch in den Aufnahmeraum von außen eindringende Feuchtigkeit bzw. Wasser zumindest gering zu halten.

Aus der DE 102 61 873 B4 ist beispielsweise eine nicht wässrige Elektrolytbatterie umfassend einen Batteriekörper mit einer Kathode bekannt. Die Elektrolytbatterie umfasst ferner eine Anode und einen nicht wässrigen Elektrolyten für den Durchgang elektrischen Stroms zwischen Kathode und Anode. Es ist ein Laminatgehäuse mit thermisch geschmolzener Peripherie umfassend ein Paar laminierter Folien vorgesehen, die am äußeren Umfang des Laminatgehäuses zusammengeschmolzen sind zum Verkapseln des Batteriekörpers innerhalb des Laminatgehäuses. Ferner ist ein feuchtigkeitsabsorbierendes Element vorgesehen, welches innerhalb der thermisch geschmolzenen Peripherie zwischen überlappenden Randabschnitten der Folien in einer beabstandeten Beziehung zu dem Batteriekörper eingekapselt ist.

Der DE 10 2008 034 698 A1 ist eine Batterie mit einem Batteriegehäuse als bekannt zu entnehmen, welche ein Feuchtigkeit sorbierendes Element umfasst. Das Feuchtigkeit sorbierende Element ist mittels einer lösbaren kraft-und/oder formschlüssigen Verbindung in ein Inneres des Batteriegehäuses ragend an diesem befestigt.
Des Weiteren offenbart die JP 2000243357 A eine Batterie mit einem Gehäuse, wobei ein Feuchtigkeit absorbierendes Element vorgesehen ist.

Die DE 10 2010 010 844 A1 offenbart ein Speichermodul zur Spannungsversorgung eines Kraftfahrzeugs, mit einer Anzahl an Speicherzellen, die jeweils ein erstes und ein zweites Anschlussterminal unterschiedlicher Polarität, über die die Speicherzellen elektrisch zu dem Speichermodul verschaltet sind, und ein Ventil aufweisen. Über das Ventil kann ein in einer Speicherzel-le vorhandener Innendruck abgebaut werden. Ferner kann über das Venti Elektrolyt der Speicherzelle aus dieser austreten. Dabei ist es vorgesehen, dass eine saugfähige Schicht zur Aufnahme und Bindung auslaufenden Elektrolyts benachbart zu dem und/oder im Bereich des Ventils einer jeweiligen Speicherzelle angeordnet ist.

Der US 2011/012702 A1 ist eine Sekundärbatterie als bekannt zu entnehmen. Die Sekundärbatterie umfasst ein so genanntes Pouch-Behältnis, welches eine Elektrodenanordnung enthält. Bei einem solchen Pouch-Behältnis handelt es sich um eine flexible Hülle. Ein Elektroden-Anschlussgerät ist mit der Elektrodenanordnung verbunden und umfasst ein seitliches Ende, das außerhalb des Pouch-Behältnis angeordnet ist. Die Sekundärbatterie umfasst ferner eine Einrichtung zum Ausbilden einer Öffnung, wobei die Einrichtung mit dem Pouch-Behältnis verbunden und dazu ausgebildet ist, eine Öffnung in dem Pouch-Behältnis auszubilden, wenn das Pouch-Behältnis ansteht.

Die DE 10 2008 006026 A1 offenbart ein Kraftwagen mit einer Batterie zum Speichern von elektrischer Energie, welche wenigstens eine Batteriezelle mit einem Gehäuse mit einem Aufnahmeraum umfasst, in dem ein Elektrolyt der Batterie aufgenommen ist, und mit wenigstens einem Öffnungselement mittels welchem bei Erfülltsein wenigstens einer vorgebbaren Bedingung wenigstens eine Austrittsöffnung des Gehäuses für den Elektrolyten ausbildbar ist, wobei das Öffnungselement wenigstens ein Öffnungsteil zum Ausbilden der Austrittsöffnung und einen Aktor umfasst, mittels welchem zum Ausbilden der Austrittsöffnung das Öffnungsteil aus einer Ruhestellung in wenigstens eine Gebrauchsstellung antreibbar ist, sodass das Öffnungsteil in Stützanlage mit dem Gehäuse kommt und dieses unter gezieltem Ausbilden der Austrittsöffnung durchdringt, wobei das Öffnungsteil in der Gebrauchsstellung teilweise in den Aufnahmeraum hineinragt und teilweise über die Austrittsöffnung aus dem Aufnahmeraum herausragt und weningstens eine von dem Elektrolyten durchströmbare Durchgangöffnung aufweist, über welche der Elektrolyt in der Gebrauchsstellung des Öffnungsteils aus dem Aufnahmeraum an die Umgebung des Gehäuses führbar ist, wobei wenigstens ein Sensor zum Erfassen einer unfallbedingten Kraftbeaufschlagung des Kraftwagens und eine mit dem Sensor gekoppelte Steuereinheit zum Empfangen eines die unfallbedingte Kraftbeaufschlagung charakterisierenden Signals vom Sensor vorgesehen sind, und wobei die Steuereinheit dazu ausgelegt ist, in Abhängigkeit von dem empfangenen Signal die durch das Öffnungselement zu bewirkende Ausbildung der Austrittsöffnung auszulösen.

Die DE 10 2010 010844 A1 offenbart die Verwendung eines Sorbsionselements, das zum Sorbieren des über ein Ventil aus dem Gehäuse von eine Batterie ausströmenden Elektrolyten vorgesehen ist.

Schließlich geht aus der US 2010/0136402 A1 ein versiegeltes Batterie-Pack hervor, welches ein erstes Gehäuseelement umfasst. Im ersten Gehäuseelement ist eine Mehrzahl von Batterien angeordnet. Es ist ein zweites Gehäuseelement in Form eines Deckels vorgesehen, welcher mit dem ersten Gehäuseelement verbunden ist. Zwischen den Gehäuseelementen ist eine Dichtung angeordnet. Im Inneren des Batterie-Packs sind Mittel zum Einstellen einer geringen Feuchtigkeit aufgenommen.

Vor dem Hintergrund einer zunehmenden Elektrifizierung der Antriebsstränge von Kraftwagen, um die Kraftwagen besonders energieeffizient antreiben zu können, nehmen die Energiedichte und die Leistungsfähigkeit von Batterien stetig zu, so dass sich die Batterien hinsichtlich ihres Gewichts und ihres Bauraumbedarfs besonders leicht bzw. klein ausbilden lassen.

Es ist daher Aufgabe der vorliegenden Erfindung, einen Kraftwagen mit einer Batterie der eingangs genannten Art zu schaffen, welche die Realisierung einer weiter verbesserten Sicherheit ermöglicht.

Diese Aufgabe wird durch einen Kraftwagen mit den Merkmalen des Patentanspruchs 1 gelöst. Vorteilhafte Ausgestaltungen mit zweckmäßigen und nicht-trivialen Weiterbildungen der Erfindung sind in den übrigen Ansprüchen angegeben.

Ein solcher Kraftwagen umfasst eine Batterie zum Speichern von elektrischer Energie. Die Batterie weist ein Gehäuse mit einem Aufnahmeraum auf, in dem ein, insbesondere flüssiger, Elektrolyt der Batterie aufgenommen ist. Weiterhin ist wenigstens ein Öffnungselement vorgesehen, mittels welchem bei Erfülltsein wenigstens einer vorgebbaren Bedingung wenigstens eine Austrittsöffnung des Gehäuses für den Elektrolyten ausbildbar ist.

Es ist wenigstens ein Sorbtionselement zum Sorbieren des über die Austrittsöffnung aus dem Gehäuse ausströmenden Elektrolyten vorgesehen. Das Sorbtionselement kann somit den aus dem Gehäuse über die Ausströmöffnung ausströmenden Elektrolyten, beispielsweise durch Absorption oder durch Adsorption, aufnehmen und binden und dadurch eine unerwünscht große Ausbreitung des Elektrolyten verhindern. Dadurch können auch aus dem Ausströmen etwaig resultierende Effekte und so etwaige Gefahrensituationen vermieden werden.

Darüber hinaus kann beim erfindungsgemäßen Kraftwagen die Entstehung eines unerwünscht hohen Drucks im Aufnahmeraum der Batterie, beispielsweise infolge einer z.B. unfallbedingten Fehlfunktion der Batterie vermieden werden, da der Aufnahmeraum bzw. das Gehäuse mittels des Öffnungselements beispielsweise bei einer unfallbedingten Kraftbeaufschlagung gezielt geöffnet werden kann. Hierdurch können auch die Folgen eines internen Kurzschlusses der Batterie, welcher beispielsweise aufgrund einer Deformation der Batterie bei einem Unfall auftreten könnte, vermieden oder kontrolliert gering gehalten werden.

Durch das gezielte Öffnen strömt der Elektrolyt mehr in einem flüssigen als in einem gasförmigen Aggregatzustand aus dem Gehäuse aus und kann dadurch besonders gut durch das Sorbtionselement sorbiert werden. Darüber hinaus ist es durch das gezielte Öffnen des Gehäuses mittels des Öffnungselements möglich, die Austrittsöffnung in ihrer Größe definiert und gezielt auszugestalten, so dass die Menge des über die Austrittsöffnung ausströmenden Elektrolyten oder sein Massen- und/oder Volumenstrom gezielt eingestellt und besonders gering gehalten werden können. Dadurch kann auch das Sorbtionselement hinsichtlich seiner Erstreckung und/oder seines Gewichts gering gehalten werden.

Das Sorbtionselement kann auch dazu genutzt werden, andere, aus der Batterie austretende Flüssigkeiten wie beispielsweise Kühlwasser zu binden und dadurch eine unerwünschte Ausbreitung zu vermeiden, wodurch auch aus diesem Austritt resultierende Effekte vermieden werden können.

Da die Entstehung eines unerwünscht hohen Drucks im Aufnahmeraum der Batterie durch das gezielte Öffnen dieser mittels des Öffnungselements vermieden werden kann, kann die Batterie an besonders vorteilhaften Stellen und in besonders vorteilhaften Bauräumen des Kraftwagens angeordnet werden, da eine beispielsweise unfallbedingte Deformation der Batterie und insbesondere ihres Gehäuses zugelassen werden kann. Darüber hinaus ist es möglich, ein besonders geringes Gewicht der Batterie zu realisieren, da die Batterie nicht gepanzert und somit vor Deformationen und/oder vor Intrusionen geschützt werden müss.

Vorteilhafterweise ist die Batterie als Lithium-Ionen-Batterie ausgebildet, wodurch die Batterie eine sehr hohe Energiedichte aufweist. Dadurch können ein geringes Gewicht sowie ein geringer Bauraumbedarf der Batterie realisiert werden.

Vorzugsweise ist die Batterie eine Hochvolt-Batterie und dient zum Antreiben wenigstens einer elektrischen Maschine, mittels welcher wenigstens ein Rad des Kraftwagens antreibbar ist. Der Kraftwagen ist dabei beispielsweise als Hybrid-Fahrzeug oder als Elektrofahrzeug ausgebildet und kann zumindest unterstützend mittels der elektrischen Maschine angetrieben werden. Ferner kann vorgesehen sein, dass die elektrische Maschine das wenigstens eine korrespondierende Rad ohne Unterstützung einer Verbrennungskraftmaschine antreibt, so dass der Kraftwagen unter Versorgung der elektrischen Maschine mit elektrischer Energie aus der Batterie elektrisch und somit emissionslos angetrieben werden kann. Die elektrische Maschine ist somit vorteilhafterweise als sogenannte Traktionsmaschine des Kraftwagens ausgebildet.

Um die Austrittsöffnung beispielsweise hinsichtlich ihrer Form und/oder ihres Strömungsquerschnitts besonders gezielt auszubilden, ist es erfindungsgemäß vorgesehen, dass das Öffnungselement wenigstens ein Öffnungsteil zum Ausbilden der Austrittsöffnung und einen Aktor umfasst, wobei das Öffnungsteil mittels des Aktors antreibbar ist, um die Austrittsöffnung auszubilden. Mit anderen Worten ist das Öffnungsteil mittels des Aktors relativ zum Gehäuse bewegbar, um dadurch die Austrittsöffnung gezielt im Gehäuse auszubilden.
Der Aktor kann als mechanisch, elektromechanisch oder anderweitig betätigbarer Aktor ausgebildet sein, so dass das Öffnungsteil entsprechend mechanisch, elektromechanisch oder auf andere Weise antreibbar ist.

In weiterer vorteilhafter Ausgestaltung der Erfindung ist wenigstens ein Sensorelement zum Erfassen einer unfallbedingten Kraftbeaufschlagung des Kraftwagens vorgesehen. Darüber hinaus ist eine mit dem Sensor gekoppelte Steuereinheit zum Empfangen eines die unfallbedingte Kraftbeaufschlagung charakterisierenden Signals vom Sensor vorgesehen. Mit anderen Worten ist vom Sensor wenigstens ein die unfallbedingte Kraftbeaufschlagung charakterisierendes Signal an die Steuereinheit übertragbar.

Die Steuereinheit ist dazu ausgelegt, in Abhängigkeit von dem empfangenen, die unfallbedingte Kraftbeaufschlagung charakterisierenden Signal die durch das Öffnungselement zu bewirkende Ausbildung der Austrittsöffnung auszulösen. Mit anderen Worten ist die Steuereinheit dazu ausgelegt, in Abhängigkeit von dem die unfallbedingte Kraftbeaufschlagung charakterisierenden Signal wenigstens ein Aktivierungssignal an das Öffnungselement zu übermitteln, wodurch das Öffnungselement aktiviert wird. Infolge der Aktivierung des Öffnungselements wird die Austrittsöffnung durch das Öffnungselement ausgebildet. Hierdurch ist eine besonders frühzeitige, bedarfsgerechte und schnelle Ausbildung der Austrittsöffnung realisierbar, so dass ein unerwünschter Druckanstieg im Aufnahmeraum besonders sicher vermieden werden kann.

Das die unfallbedingte Kraftbeaufschlagung charakterisierende Signal kann dabei eine tatsächliche, unfallbedingte Kraftbeaufschlagung des Kraftwagens charakterisieren. Dies bedeutet, dass eine tatsächliche Kollision des Kraftwagens mit einem Unfallgegner mittels des Sensors erfasst und durch das Signal charakterisiert wird. Das Öffnungselement wird somit sehr kurze Zeit nach der tatsächlichen, unfallbedingten Kraftbeaufschlagung des Kraftwagens aktiviert.

Ferner ist es möglich, dass das die unfallbedingte Kraftbeaufschlagung charakterisierende Signal eine in Zukunft eintretende und als unvermeidbar eingeschätzte bzw. bewertete Kraftbeaufschlagung des Kraftwagens, d.h. eine in Zukunft eintretende und als unvermeidbar eingeschätzte bzw. bewertete Kollision des Kraftwagens mit einem Unfallgegner charakterisiert. Hierdurch ist es möglich, das Öffnungselement bereits zeitlich vor der tatsächlichen, unfallbedingten Kraftbeaufschlagung, d.h. zeitlich vor der tatsächlichen Kollision des Kraftwagens mit dem Unfallgegner oder zum Zeitpunkt der tatsächlichen Kraftbeaufschlagung zu aktivieren, um so das Gehäuse zum Zeitpunkt des Beginns der tatsächlichen, unfallbedingten Kraftbeaufschlagung oder zeitlich vor dem Beginn der eigentlichen, unfallbedingten Kraftbeaufschlagung zu öffnen.

In besonders vorteilhafter Ausgestaltung der Erfindung ist eine Wandung des Gehäuses, in welcher die Austrittsöffnung mittels des Öffnungselementes ausbildbar ist, zumindest bereichsweise mit dem Sorbtionselement versehen. Dadurch kann das Sorbtionselement den Elektrolyten besonders gut sorbieren und beispielsweise aufsaugen, so dass eine unerwünschte Ausbreitung des Elektrolyten vermieden werden kann. Vorzugsweise ist das Sorbtionselement auf einer dem Aufnahmeraum abgewandten Außenseite der Wandung angeordnet, wodurch der Elektrolyt zumindest im Wesentlichen unmittelbar nach seinem Austritt aus dem Aufnahmeraum an die Umgebung der Batterie gebunden werden kann.

Bei einer weiteren besonders vorteilhaften Ausführungsform der Erfindung ist vorgesehen, dass das Sorbtionselement an einem Wandungselement, insbesondere einem Bodenelement, des Kraftwagens angeordnet ist, wobei die Batterie an dem Wandungselement abgestützt ist. Hierdurch kann die Ausbreitung des austretenden Elektrolyten sehr gut beschränkt werden. Vorzugsweise ist das Wandungselement in Fahrzeughochrichtung unterhalb der Batterie angeordnet. Strömt der aus der Austrittsöffnung ausströmende Elektrolyt beispielsweise unter Schwerkrafteinwirkungen in Fahrzeughochrichtung nach unten zu dem Wandungselement, so kann der Elektrolyt infolge der entsprechenden Anordnung des Sorbtionselements an diesem Wandungselement durch das Sorbtionselement aufgenommen werden.

Als besonders vorteilhaft hat es sich gezeigt, wenn die mittels des Öffnungselements auszubildende Austrittsöffnung und das Sorbtionselement auf einer gemeinsamen Seite der Batterie angeordnet sind. Hierdurch erreicht der Elektrolyt das Sorbtionselement nach einem nur geringen Strömungsweg, so dass eine Ausbreitung sehr gut beschränkt werden kann.

Bei einer weiteren vorteilhaften Ausführungsform der Erfindung ist die Austrittsöffnung mittels des Öffnungselements infolge einer unfallbedingten Verlagerung des Öffnungselements über einen vorgebbaren Weg relativ zur Batterie und somit unabhängig von einem in dem Aufnahmeraum herrschenden bzw. infolge einer unfallsbedingten Kraftbeaufschlagung des Kraftwagens ansteigenden Druck ausbildbar. Das Gehäuse kann somit gezielt geöffnet werden, bevor es in dem Gehäuse überhaupt zu einem wesentlichen Druckanstieg kommen kann. Dadurch können die etwaigen, aus einem Druckanstieg resultierenden Effekte effektiv und effizient vermieden werden.

Um eine besonders schnelle Bewegung des Öffnungsteils zu bewirken, um dadurch die Austrittsöffnung auszubilden, ist der Aktor als pyrotechnischer Aktor ausgebildet. Dabei ist das Öffnungsteil beispielsweise mittels einer explosionsartigen Gasendladung aus einer Ruhestellung in wenigstens eine die Austrittsöffnung ausbildende Gebrauchsstellung bewegbar.

Das Gehäuse mit dem Aufnahmeraum ist beispielsweise wenigstens einer Batteriezelle der Batterie zugeordnet. Das Gehäuse kann dabei in einem Batteriegehäuse der Batterie aufgenommen sein, so dass das Gehäuse von dem Batteriegehäuse umgeben ist. Dabei kann auch das Öffnungselement in dem Batteriegehäuse und beispielsweise außerhalb des Gehäuses angeordnet sein.

Dadurch kann infolge des gezielten Öffnens des Gehäuses mittels des Öffnungselements Elektrolyt aus dem Gehäuse aus- und in das Batteriegehäuse einströmen. Hierdurch kann der unerwünscht hohe Druck in dem Aufnahmeraum vermieden werden. Darüber hinaus kann vermieden werden, dass Elektrolyt auch aus dem Batteriegehäuse an die umgebung der Batterie strömt. Der nun aus dem Gehäuse ausströmende Elektrolyt kann durch das Batteriegehäuse aufgefangen werden. Ferner kann hierbei vorgesehen sein, dass das Sorbtionselement innerhalb des Batteriegehäuses und beispielsweise außerhalb des Aufnahmeraums des Gehäuses angeordnet ist. Dadurch kann der Elektrolyt innerhalb des Batteriegehäuses durch das Sorbtionselement gebunden und ein Ausströmen des Elektrolyten aus dem Batteriegehäuse vermieden werden.

Bei einer besonders vorteilhaften Ausführungsform der Erfindung weist das Öffnungselement wenigstens eine Durchgangsöffnung auf, welche von dem Elektrolyten durchströmbar ist. Befindet sich das Öffnungselement beispiels-weise in seiner Gebrauchsstellung, in welcher die wenigstens eine Austrittsöffnung ausgebildet ist, so ragt das Öffnungselement teilweise in den Aufnahmeraum hinein und über die Austrittsöffnung teilweise aus dem Aufnahmeraum heraus an die Umgebung des Gehäuses. Der in dem Aufnahmeraum aufgenommene Elektrolyt kann nun das Öffnungselement über die Durchgangsöffnung durchströmen und so aus dem Aufnahmeraum über die Durchgangsöffnung an die Umgebung des Gehäuses ausströmen. Dadurch kann ein gezieltes und definiertes Ausströmen des Elektrolyten realisiert werden.

Weitere Vorteile, Merkmale und Einzelheiten der Erfindung ergeben sich aus der nachfolgenden Beschreibung bevorzugter Ausführungsbeispiele sowie anhand der Zeichnung. Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

Die Zeichnung zeigt in:
- Fig. 1: eine schematische Draufsicht eines Personenkraftwagens mit einer Batterie zum Speichern von elektrischer Energie, welche ein Gehäuse mit einem Aufnahmeraum umfasst, in dem ein Elektrolyt der Batterie aufgenommen ist, und mit wenigstens einem Öffnungselement, mittels welchem bei Erfülltsein wenigstens einer vorgebbaren Bedingung wenigstens eine Austrittsöffnung des Gehäuses für den Elektrolyten ausbildbar ist, wobei wenigstens ein Sorbtionselement zum Sorbieren des über die Austrittsöffnung aus dem Gehäuse ausströmenden Elektrolyten vorgesehen ist;
- Fig. 2: eine schematische Draufsicht einer weiteren Ausführungsform des Kraftwagens;
- Fig. 3: eine schematische Perspektivansicht einer Ausführungsform der Batterie sowie eine schematische Längsschnittansicht einer Ausführungsform des der Batterie zugeordneten Öffnungselements;
- Fig. 4: eine schematische Perspektivansicht einer Anordnung einer Batterie an einem Bodenelement eines Kraftwagens, wobei der Batterie ein Öffnungselement zum gezielten Öffnen der Batterie zugeordnet ist;
- Fig. 5: zwei schematische Perspektivansichten unterschiedlicher Anordnungsmöglichkeiten der Batterie gemäß Fig. 4;
- Fig. 6: zwei schematische Perspektivansichten einer weiteren Ausführungsform der Batterie mit einer weiteren Ausführungsform des der Batterie zugeordneten Öffnungselements;
- Fig. 7: zwei schematische Perspektivansichten der Batterie gemäß Fig. 6 mit einer weiteren Ausführungsform des Öffnungselements;
- Fig. 8: zwei schematische Perspektivansichten der Batterie gemäß Fig. 7 mit einer weiteren Ausführungsform des Öffnungselements;
- Fig. 9: zwei schematische Perspektivansichten der Batterie gemäß Fig. 8 mit einer weiteren Ausführungsform des Öffnungselements;
- Fig. 10: eine schematische Perspektivansicht einer weiteren Ausführungsform der Batterie mit einer Ausführungsform des Öffnungselements;
- Fig. 11: eine schematische Perspektivansicht der Batterie gemäß Fig. 10 mit einer weiteren Ausführungsform des Öffnungselements;
- Fig. 12: eine schematische Draufsicht einer weiteren Ausführungsform der Batterie mit einer weiteren Ausführungsform des Öffnungselements;
- Fig. 13: eine schematische Perspektivansicht einer weiteren Ausführungsform der Batterie mit einem der Batterie zugeordneten Öffnungselement;
- Fig. 14: eine schematische Seitenansicht der Batterie und des ihr zugeordneten Öffnungselements gemäß Fig. 13;
- Fig. 15: eine schematische Perspektivansicht einer weiteren Ausführungsform der Batterie mit einem Öffnungselement zum Öffnen der Batterie; und
- Fig. 16: eine schematische Perspektivansicht der Batterie gemäß Fig. 15 mit einer weiteren Ausführungsform des Öffnungselements.

In den Figuren sind gleiche oder funktionsgleiche Elemente mit den gleichen Bezugszeichen versehen.

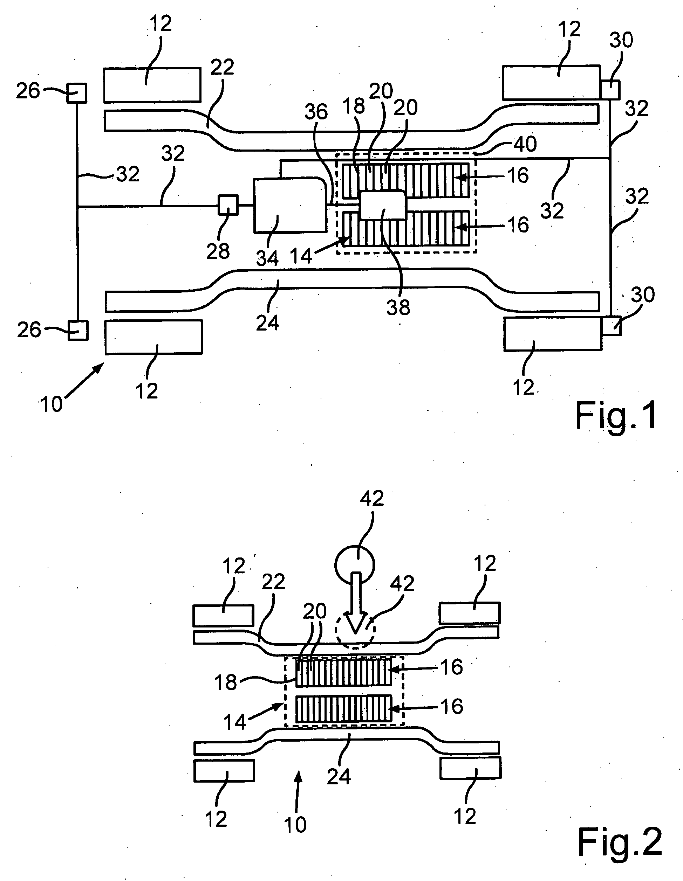

Fig. 1 zeigt einen im Ganzen mit 10 bezeichneten Personenkraftwagen. Der Personenkraftwagen 10 ist beispielsweise als Elektrofahrzeug oder als Hybrid-Fahrzeug ausgebildet und umfasst wenigstens eine, in Fig. 1 nicht dargestellte elektrische Maschine, mittels welcher in einem Motorbetrieb wenigstens ein Rad 12 des Personenkraftwagens antreibbar ist. In Fig. 1 sind vom Personenkraftwagen 10 auch jeweilige Seitenschweller 22, 24 an der Karosserie des Personenkraftwagens zu erkennen.

In dem Motorbetrieb wird die elektrische Maschine mit elektrischer Energie, d.h. mit elektrischem Strom versorgt. Zum Speichern der elektrischen Energie umfasst der Personenkraftwagen 10 eine im Ganzen mit 14 bezeichnete Batterie. Die Batterie 14 weist eine Mehrzahl von Batteriezellen 16 auf. Den Batteriezellen 16 ist ein Gehäuse 18 zugeordnet, welches jeweilige Aufnahmeräume 20 der Batteriezellen 16 aufweist. In den jeweiligen Aufnahmeräumen 20 ist ein Elektrolyt der Batterie 14 aufgenommen. Ferner sind in den jeweiligen Aufnahmeräumen 20 jeweilige Elektroden der Batteriezellen 16 aufgenommen. Die Batteriezellen 16 sind beispielsweise als Lithium-Ionen-Zellen ausgebildet.

Die Batteriezellen 16 werden üblicherweise im Ganzen auch als Batterie-Pack bezeichnet und können beispielsweise in einem in Fig. 1 nicht dargestellten Batteriegehäuse der Batterie 14 aufgenommen sein.

Der Personenkraftwagen 10 umfasst auch Sensoren 26, 28, 30, mittels welchen eine unfallbedingte Kraftbeaufschlagung des Personenkraftwagens 10 erfassbar ist. Daher werden die Sensoren 26, 28, 30 üblicherweise auch als Unfallsensoren oder als Crashsensoren bezeichnet.

Die Sensoren 26, 28, 30 sind über Leitungen 32 mit einer Steuereinheit in Form eines Steuergeräts 34 des Personenkraftwagens 10 verbunden. Hierdurch können die Sensoren 26, 28, 30 über die Leitungen 32 wenigstens ein jeweiliges, eine unfallbedingte Kraftbeaufschlagung des Personenkraftwagens 10 charakterisierendes Signal an das Steuergerät 34 übertragen.

Das Steuergerät 34 ist beispielsweise auch mit wenigstens einem Airbag des Personenkraftwagens 10 verbunden. In Abhängigkeit von dem entsprechenden, von wenigstens einem der Sensoren 26, 28, 30 an das Steuergerät 34 übertragenen, die unfallbedingte Kraftbeaufschlagung charakterisierenden Signal wird wenigstens ein Auslösesignal von dem Steuergerät 34 an den Airbag übertragen, wodurch der Airbag ausgelöst, d.h. gezündet wird. Dadurch kann wenigstens ein Fahrzeuginsasse des Personenkraftwagens 10 bei der unfallbedingten Kraftbeaufschlagung durch den Airbag aufgefangen und rückgehalten werden.

Das Steuergerät 34 ist über eine Leitung 36 auch mit einem aktiven Öffnungselement 38 des Personenkraftwagens 10 verbunden. Das Öffnungselement 38 ist den Batteriezellen 16 zugeordnet und dient dazu, im Gehäuse 18 wenigstens eine Austrittsöffnung für den Elektrolyten auszubilden. Mit anderen Worten ist mittels des Öffnungselements 38 bei Erfülltsein wenigstens einer vorgebbaren Bedingung wenigstens eine Austrittsöffnung des Gehäuses 18 für den Elektrolyten ausbildbar, so dass der in dem entsprechenden Aufnahmeraum 20 aufgenommene und beispielsweise zumindest im Wesentlichen flüssige Elektrolyt über die Austrittsöffnung aus dem Gehäuse 18 ausströmen kann. Dadurch kann eine unfallbedingte Entstehung eines unerwünscht hohen Drucks in den Aufnahmeräumen 20, beispielsweise infolge einer unerwünschten, unfallbedingten Fehlfunktion in Form eines Kurzschlusses vermieden werden.

In Abhängigkeit von dem von wenigstens einem der Sensoren 26, 28, 30 an das Steuergerät 34 übermittelten, die unfallbedingte Kraftbeaufschlagung charakterisierenden Signal sendet das Steuergerät 34 wenigstens ein entsprechendes Auslösesignal an das vorliegend aktive Öffnungselement 38, wodurch das Öffnungselement 38 aktiviert wird. Infolge dieser Aktivierung des Öffnungselements 38 wird die wenigstens eine Austrittsöffnung im Gehäuse 18 durch das Öffnungselement 38 gezielt ausgebildet, so dass der Elektrolyt gezielt aus dem jeweiligen Aufnahmeraum 20 austreten kann.

Durch dieses gezielte Öffnen des Gehäuses 18 kann auch die Austrittsöffnung hinsichtlich ihrer Größe und/oder ihrer Form gezielt ausgestaltet werden, so dass die Menge des ausströmenden Elektrolyten beschränkt, d.h. gering gehalten werden kann.

Um einen Austritt des Elektrolyten auch aus dem das Gehäuse 18 umgebenden Batteriegehäuse zu vermeiden oder gering zu halten, ist wenigstens ein in Fig. 1 sehr schematisch dargestelltes Sorbtionselement 40 vorgesehen. Das Sorbtionselement 40 ist beispielsweise außerhalb des Gehäuses 18 und innerhalb des Batteriegehäuses angeordnet und dient dazu, den aus dem Gehäuse 18 ausströmenden Elektrolyten innerhalb des Batteriegehäuses zu sorbieren und dadurch zu binden.

Alternativ oder zusätzlich kann auch wenigstens ein Sorbtionselement außerhalb des Batteriegehäuses angeordnet sein, um etwaig aus dem Batteriegehäuse austretenden Elektrolyten zu sorbieren.

Durch die Sorbtion, beispielsweise die Adsorption und/oder Absorption des Elektrolyten, können aus dem Ausströmen des Elektrolyten resultierende Effekte vermieden oder die Gefahr des Auftretens dieser Effekte gering gehalten werden, so dass eine besonders hohe Sicherheit der Batterie 14 und somit des Personenkraftwagens 10 realisierbar ist.

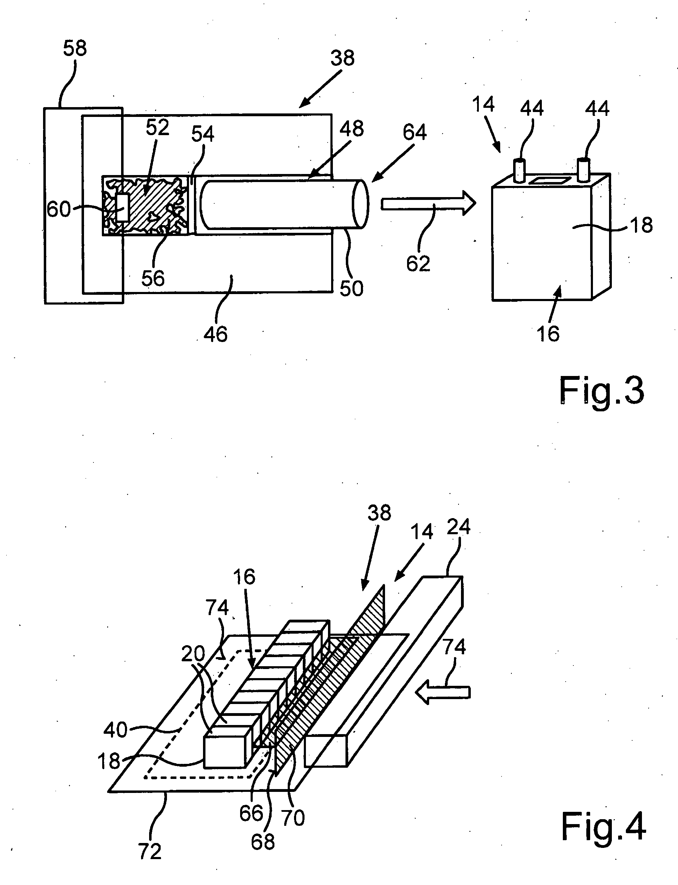

Wie noch im Folgenden in Zusammenhang mit Fig. 3 erläutert wird, kann das Öffnungselement 38 einen pyrotechnischen Aktor umfassen, mittels welchem die wenigstens eine Ausströmöffnung besonders schnell und gezielt auszubilden ist.

Wie aus Fig. 1 erkennbar ist, sind die Sensoren 26, 30 in Fahrzeuglängsrichtung vor bzw. hinter den Rädern 12 angeordnet. Mit anderen Worten sind die Sensoren 26, 30 in Fahrzeuglängsrichtung außenseitig der Räder 12 angeordnet. Mittels der Sensoren 26, 30 ist somit beispielsweise eine Frontal- und Heckkollision des Personenkraftwagens 10 mit einem Unfallgegner erfassbar. Eine solche Frontal- oder Heckkollision führt zu einer zumindest im Wesentlichen in Fahrzeuglängsrichtung verlaufenden unfallbedingten Kraftbeaufschlagung des Personenkraftwagens 10, so dass wenigstens einer der Sensoren 26, 30 ein entsprechendes, die unfallbedingte Kraftbeaufschlagung charakterisierendes Signal an das Steuergerät 34 übermittelt.

Eine entsprechende unfallbedingte Kraftbeaufschlagung kann auch durch den Sensor 28 erfasst werden. Mittels der Sensoren 26, 28, 30 ist auch eine in Fahrzeugquerrichtung verlaufende, unfallbedingte Kraftbeaufschlagung des Personenkraftwagens 10, zu der aus beispielsweise bei einem anhand von Fig. 2 veranschaulichten Seitenaufprall kommt, erfassbar.

Fig. 2 veranschaulicht eine zumindest im Wesentlichen in Fahrzeugquerrich-tung verlaufende, unfallbedingte Kraftbeaufschlagung infolge eines Seitenaufpralls, bei welchem der Personenkraftwagen 10 auf einen Pfahl 42 als Unfallgegner aufprallt.

Eine solche unfallbedingte Kraftbeaufschlagung wird mittels wenigstens eines der Sensoren 26, 28, 30 erfasst, woraufhin das die unfallbedingte Kraftbeaufschlagung charakterisierende Signal an das Steuergerät 34 übermittelt wird. In der Folge übermittelt das Steuergerät 34 das Auslösesignal an die Öffnungselement 38, mittels welchem die wenigstens eine Austrittsöffnung gezielt in das Gehäuse 18 eingebracht wird.

Fig. 3 veranschaulicht eine Ausführungsform des Öffnungselements 38 anhand einer Ausführungsform der Batterie 14 mit wenigstens einer Batteriezelle 16. In Fig. 3 sind auch elektrische Anschlüsse 44 der Batteriezelle 16 zu erkennen, über welche die in dem Aufnahmeraum des Gehäuses 18 aufgenommenen Elektroden elektrisch kontaktiert werden können.

Das im Ganzen mit 38 bezeichnete Öffnungselement gemäß Fig. 3 ist als pyrotechnisches Element ausgebildet, welches in der Lage ist, die Batterie-zelle 16 mechanisch zu öffnen. Das Öffnungselement 38 umfasst vorliegend einen massiven Grundkörper 46 mit einer Aufnahme 48, in welcher ein Intrusionskörper 50 als Öffnungsteil des Öffnungselements 38 zumindest bereichsweise aufgenommen ist. Der Intrusionskörper 50 ist entlang der als Führung ausgebildeten Aufnahme 48 geführt translatorisch relativ zu dem Grundkörper 46 bewegbar und kann aus einer in Fig. 3 gezeigten Ruhestellung in wenigstens eine Gebrauchsstellung bewegt werden, wodurch die wenigstens eine Austrittsöffnung im Gehäuse 18 ausgebildet wird.

Der Grundkörper 46 weist auch eine Kammer 52 auf, welche mittels eines Trennelements 54, beispielsweise in Form einer Membran oder einer Berstscheibe, von der Aufnahme 48 fluidisch getrennt ist. In der Kammer 52 ist eine Treibladung 56 aufgenommen. Mit der Treibladung 56 ist ein elektrischer Zündkreis 58 verbunden.

Wird der Zündkreis 58 bestromt, d.h. mit elektrischem Strom versorgt, so erwärmt sich ein elektrischer Widerstand 60 des Zündkreises 58, wobei der Widerstand 60 in der Kammer 52 aufgenommen ist. Infolge der Erwärmung des elektrischen Widerstands 60 wird die Treibladung 56 ab einer vorgebbaren Temperatur gezündet. Infolge dieser Zündung verbrennt die Treibladung 56, wodurch in der Kammer 52 ein Gas entsteht. Infolge dieser Verbrennung und der Entstehung des expandierenden Gases entsteht in der Kammer 52 ein sehr hoher Druck, durch welchen das Trennelement 54 geöffnet und beispielsweise zerstört und der Intrusionskörper 50 aus der Ruhestellung in die Gebrauchsstellung bewegt wird, wie es in Fig. 3 durch einen Richtungspfeil 62 angedeutet ist. Dies bedeutet, dass durch das Zünden der Treibladung 56 eine explosionsartige Gasentladung bewirkbar ist, durch welche der Intrusionskörper 50 in Richtung der Batteriezelle 16 getrieben wird. Der Intrusionskörper 50 kommt in Stützanlage mit dem Gehäuse 18, durchdringt dieses und bildet so im Gehäuse 18 gezielt eine Austrittsöffnung für den Elektrolyten aus.

Durch eine geeignete und vorgebbare Geometrie des Intrusionskörpers 50, insbesondere auf einer der Batterie 14 bzw. den Batteriezellen 16 zugewandten Seite 64, kann eine gezielte Öffnung des Gehäuses 18 bewirkt werden. Insbesondere ist es dadurch möglich, die Austrittsöffnung hinsichtlich ihres vom Elektrolyten durchströmbaren Strömungsquerschnitts und/oder hinsichtlich ihrer Form gezielt auszubilden.

Alternativ zu dieser pyrotechnischen Betätigung des Intrusionskörpers 50 sind auch anderweitige Wirkprinzipien möglich, um eine entsprechende Austrittsöffnung im Gehäuse 18 auszubilden.

Zum Bewegen des Intrusionskörpers 50 kann beispielsweise ein Elektromotor, insbesondere ein Linearmotor, vorgesehen sein, um den Intrusionskörper 50 in Stützanlage mit dem Gehäuse 18 zu bewegen und beispielsweise in die Batteriezelle 16 hineinzudrücken, wodurch die Austrittsöffnung ausgebil-det wird. Ferner kann auch elektromagnetischer Antrieb, wie er beispielsweise bei einem Magnetventil vorgesehen ist, verwendet werden. Ferner ist es möglich, den Intrusionskörper 50 in seiner Ruhestellung mittels wenigstens eines Federelements mit einer Federkraft zu beaufschlagen und dadurch vorzuspannen, wobei das Federelement und/oder der Intrusionskörper 50 in der Ruhestellung mittels wenigstens eines Halteelements gehalten ist.

Um die Austrittsöffnung auszubilden, wird diese Halterung gelöst, so dass das Halteelement den Intrusionskörper 50 und/oder das Federelement freigibt. In der Folge kann sich das Federelement entspannen und den Intrusionskörper 50 in das Gehäuse 18 bewegen, wodurch die Austrittsöffnung ausgebildet wird.

Durch den Grundkörper 46, die Kammer 52, das Trennelement 54, die Treibladung 56 und den Zündkreis 58 ist ein pyrotechnischer Aktor des Öffnungselements 38 gebildet, so dass das Öffnungselement 38 als aktives Öffnungselement 38 ausgebildet ist.

Alternativ oder zusätzlich dazu ist es auch möglich, ein passives Öffnungselement 38 zum Ausbilden der wenigstens einen Austrittsöffnung vorzusehen.

Fig. 4 veranschaulicht dabei eine entsprechende Ausführungsform des als passives Öffnungselement ausgebildeten Öffnungselements 38. Fig. 4 zeigt einen Längsträger der Karosserie des Personenkraftwagens 10, welcher beispielsweise der Seitenschweller 24 ausgebildet ist. Der Seitenschweller 24 ist in Fahrzeugquerrichtung nach innen zumindest bereichsweise durch das passive Öffnungselement 38 überdeckt. Das passive Öffnungselement 38 umfasst dabei einen Intrusionskörper 66, welcher innerhalb des Batteriegehäuses an einer den Batteriezellen 16 zugewandten Innenseite 68 einer Wandung 70 des Batteriegehäuses der Batterie 14 angeordnet ist. Wie aus Fig. 4 erkennbar ist, ist das Öffnungselement 38 somit innerhalb des Batteriegehäuses jedoch außerhalb der jeweiligen Aufnahmeräume 20 angeordnet. In Fig. 4 ist auch eine Bodenplatte 72 der Batterie 14 erkennbar, welche mit der Wandung 70 verbunden und beispielsweise dem Batteriegehäuse zugeordnet ist.

In Fig. 4 ist ferner durch einen Richtungspfeil 74 eine zumindest im Wesentlichen in Fahrzeugquerrichtung verlaufende, unfallbedingte Kraftbeaufschlagung des Personenkraftwagens 10 angedeutet.

Infolge der unfallbedingten Kraftbeaufschlagung, beispielsweise bei einem Seitenaufprall, kommt es zu einer zumindest bereichsweisen Verformung des Seitenschwellers 24 in Fahrzeuglängsrichtung nach innen. Dadurch wird der Seitenschweller 24 in Stützanlage mit der Wandung 70 bewegt. Im weiteren Verlauf wird die Wandung 70 und mit dieser der Intrusionskörper 66 durch den Seitenschweller 24 in Fahrzeuglängsrichtung nach innen relativ zu den Batteriezellen 16 auf die Batteriezellen 16 zu bewegt, so dass der Intrusionskörper 66 in Stützanlage mit dem Gehäuse 18 der Batteriezellen 16 kommt. Der Intrusionskörper 66 wird somit durch die unfallbedingte Kraftbeaüfschlagung in die Batteriezellen 16 gedrückt, so dass wenigstens eine Austrittsöffnung im Gehäuse 18 ausgebildet wird, über die der Elektrolyt aus dem Gehäuse 18 austreten kann.

Zur Realisierung einer besonders vorteilhaften Austrittsöffnung ist der Intrusionskörper 66 beispielsweise zumindest im Wesentlichen keilförmig ausgebildet, wobei sich der Intrusionskörper 66 bzw. seine Keilform in Richtung der Batteriezellen 16 verjüngt. An der Spitze der Keilform kann der Intrusionskörper 66 auch mit wenigstens einer Schneide versehen sein, um somit das Gehäuse 18 auch bei nur relativ geringen Kräften durchtrennen zu können.

Eine den Batteriezellen 16 zugewandte Seite 74 der Bodenplatte 72 ist vorliegend mit wenigstens einem Sorbtionselement 40 versehen, mittels welchem der aus der wenigstens einen Austrittsöffnung ausströmende Elektrolyt sorbierbar ist. Das Sorbtionselement 40 kann dabei beispielsweise als Beschichtung der Bodenplatte 72 ausgebildet sein. Ferner kann das Sorbtionselement 40 als Matte oder dergleichen Flächengebilde ausgebildet sein, welches an der Bodenplatte 72 auf der Seite 74 angeordnet ist. Mittels des Sorbtionselements 40 kann der austretende Elektrolyt frühzeitig gebunden werden, wodurch ein Auslaufen des Elektrolyts an die Umgebung der Batterie 14 und des Personenkraftwagens 10 vermieden werden kann.

Das Sorbtionselement 40 ist dabei großflächig auf die Bodenplatte 72 aufgebracht. Vorzugsweise wird das Sorbtionselement 40 an wenigstens einer Stelle angeordnet, an der davon auszugehen ist, dass das Gehäuse 18 aufrecht bzw. an der die Austrittsöffnung ausgebildet wird.

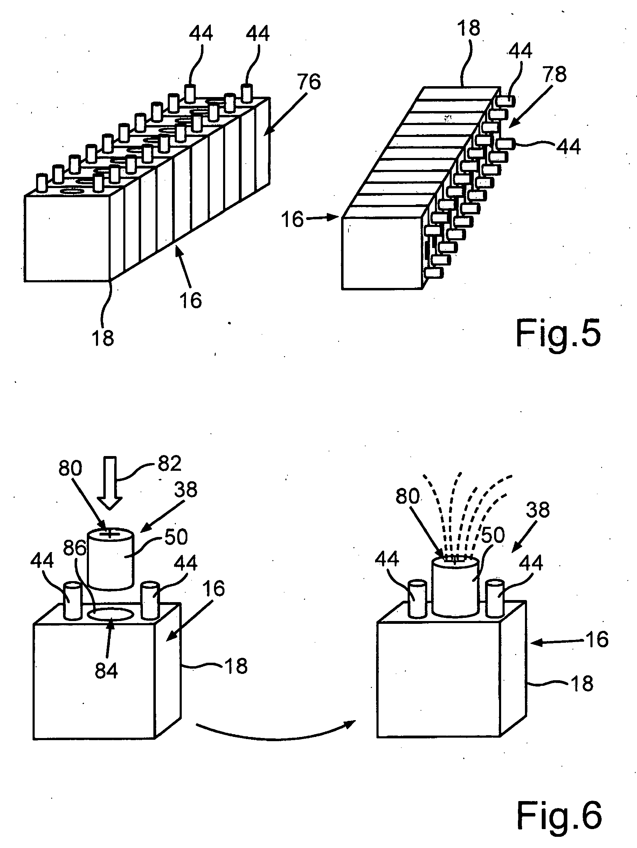

Fig. 5 veranschaulicht zwei unterschiedliche Möglichkeiten, die Batteriezellen 16 gemäß Fig. 4 insbesondere relativ zu dem Öffnungselement 38 anzuordnen bzw. auszurichten. Durch die in Fig. 5 auf der bezogen auf die Bildebene von Fig. 5 linken Seite gezeigten Anordnung der Batteriezellen 16 kann eine jeweilige Austrittsöffnung in seitlichen Wandungsbereichen 76 des Gehäuses 18 ausgebildet werden.

Bei der in Fig. 5 auf der rechten Seite angedeuteten Anordnung kann die jeweilige Austrittsöffnung auf einer Oberseite 78 der Batteriezellen 16 ausgebildet werden, auf welcher die elektrischen Anschlüsse 44 zum elektrischen Kontaktieren der Elektroden angeordnet sind.

Fig. 6 zeigt eine weitere Ausführungsform des Öffnungselements 38 und somit einen weiteren Wirkmechanismus zum Öffnen wenigstens einer Batteriezelle 16 einer Batterie. Gemäß Fig. 6 umfasst das Öffnungselement 38 als Intrusionskörper 50 eine Hülse, welche eine Durchgangsöffnung 80 aufweist.

Durch Bewegen der Hülse aus der Ruhestellung in die Gebrauchsstellung - wie es in Fig. 6 durch einen Richtungspfeil 82 angedeutet ist - wird beispielsweise eine Sollbruchstelle 84 des Gehäuses 18 durchstoßen. Die Soll-bruchstelle 84 kann beispielsweise durch eine Berstscheibe 86 gebildet sein.

Befindet sich die Hülse in ihrer Gebrauchsstellung, so ist sie teilweise innerhalb des Aufnahmeraums 20 und teilweise außerhalb des Aufnahmeraums 20 angeordnet. Dadurch kann der Elektrolyt aus dem Aufnahmeraum 20 über die Durchgangsöffnung 80 der Hülse ausströmen, wie es - bezogen auf die Bildebene von Fig. 6 - auf der rechten Seite von Fig. 6 angedeutet ist.

Der als Hülse ausgebildete Intrusionskörper 50 gemäß Fig. 6 weist dabei einen zumindest im Wesentlichen kreisrunden Querschnitt auf.

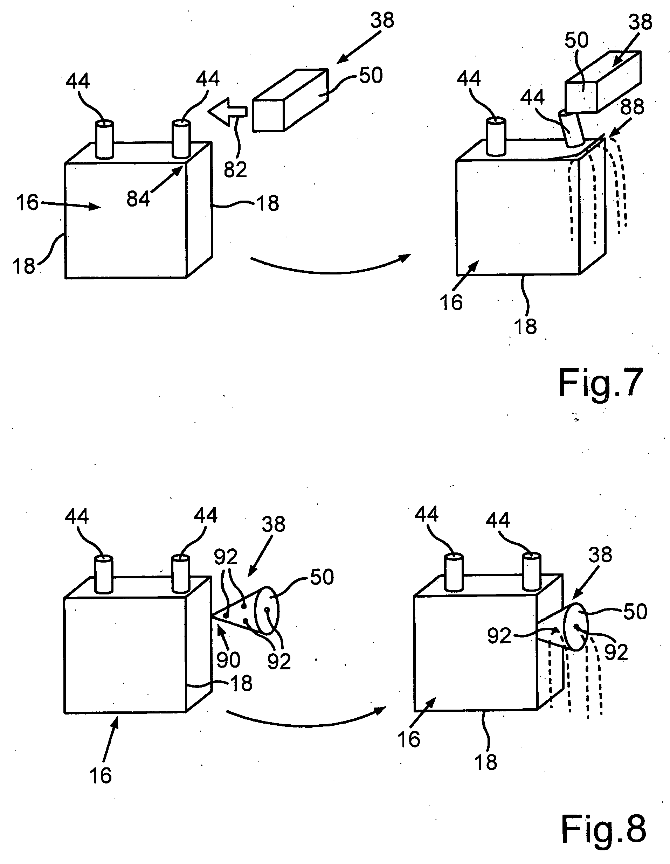

Fig. 7 zeigt eine weitere Ausführungsform des Öffnungselements 38 mit einem Intrusionskörper 50, welcher vorliegend als Quader ausgebildet ist und einen zumindest im Wesentlichen rechteckigen Querschnitt aufweist. Durch das durch den Richtungspfeil 82 angedeutete Bewegen des Intrusionskörpers 50 aus der Ruhestellung in die Gebrauchsstellung wird der Intrusionskörper 50 zunächst in Stützanlage mit einem der elektrischen Anschlüsse 44 verbracht darüber hinaus bewegt. In der Folge reißt das Gehäuse 18 beispielsweise an einer Sollbruchstelle 84 auf, wodurch eine Austrittsöffnung 88 gebildet wird. Aus dieser Austrittsöffnung 88 kann dann der Elektrolyt aus dem Aufnahmeraum 20 entweichen.

Fig. 8 zeigt eine weitere Ausführungsform des Öffnungselements 38, welches als Intrusionskörper 50 ein zumindest im Wesentlichen kegelförmiges Element mit einer Spitze 90 aufweist. Der Intrusionskörper 50 wird dabei mit seiner Spitze 90 voran in den Aufnahmeraum 20 bewegt.

Der Intrusionskörper 50 gemäß Fig. 8 weist eine Mehrzahl von Durchgangsöffnungen 92 auf. In seiner in Fig. 8 auf der rechten Seite gezeigten Gebrauchsstellung ragt der Intrusionskörper 50 teilweise in den Aufnahmeraum 20 hinein und über die ausgebildete Austrittsöffnung aus dem Aufnahmeraum 20 an die Umgebung der Batteriezelle 16 heraus. Dadurch kann der Elektrolyt über die Durchgangsöffnungen 92 vom Aufnahmeraum 20 an die Umgebung der Batteriezelle 16 ausströmen.

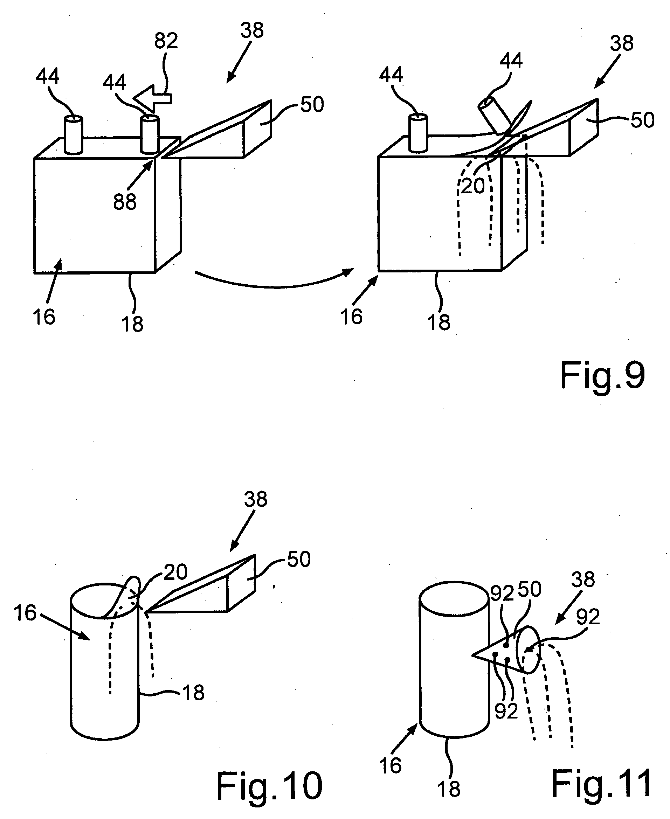

Fig. 9 zeigt eine weitere Ausführungsform des Öffnungselements 38, dessen Intrusionskörper 50 zumindest im Wesentlichen keilförmig ausgebildet ist. Beim Bewegen des Intrusionskörpers 50 aus der Ruhestellung in die Gebrauchsstellung trifft der Intrusionskörper 50 auf eine beispielsweise durch eine Schweißnaht gebildete Sollbruchstelle 88 auf, welche dadurch aufbricht und das Ausströmen des Elektrolyten ermöglicht. Die geschilderten Wirkmechanismen sind dabei nur für das Öffnen der Batteriezellen 16 auszulegen bzw. zu konstruieren. Ein Kurzschluss aufgrund des Öffnens soll verhindert werden.

Fig. 10 und 11 zeigen eine weitere Ausführungsform einer Batteriezelle 16. Die Batteriezelle 16 ist nun nicht wie zuvor zumindest im Wesentlichen quaderförmig sondern zumindest im Wesentlichen als Zylinder mit einem kreisrunden Querschnitt ausgebildet. Vorliegend sind die Batteriezellen 16 als sogenannte Rundzellen ausgebildet, bei denen das Öffnen des Gehäuses 18 ebenso aktiv oder passiv erfolgen kann. Ein Kurzschluss infolge des Öffnen wird dabei vermieden.

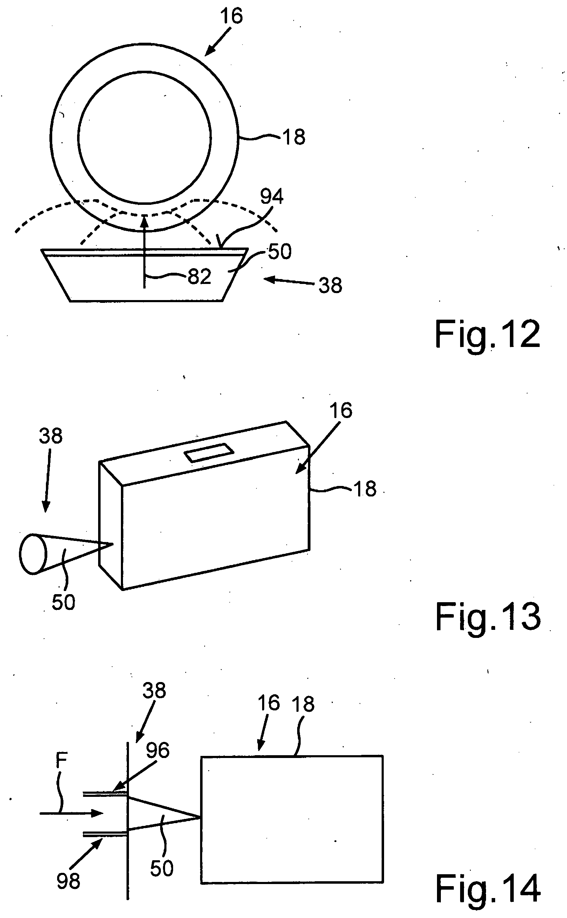

Fig. 12 zeigt eine weitere Ausführungsform der Batteriezelle 16, welche gemäß Fig. 12 also sogenannte Pouch-Zelle ausgebildet ist. Der Intrusionskörper 50 des Öffnungselements 38 ist vorliegend als Messer ausgebildet und weist auf seiner der Batteriezelle 16 zugewandten Seite 94 wenigstens eine Schneide auf.

Fig. 13 zeigt eine Batteriezelle 16, deren Gehäuse 18 durch einen zumindest im Wesentlichen kegelförmigen Intrusionskörper 50 des Öffnungselements 38 geöffnet werden kann.

Wie aus Fig. 14 erkennbar ist, wird der Intrusionskörper 50 mit einer durch einen Kraftpfeil F angedeuteten Betätigungskraft beaufschlagt und dadurch in Richtung des Gehäuses 18 bewegt.

Das Öffnungselement 38 umfasst dabei ein Führungselement 96 mit einer Führung 98, entlang welcher der Intrusionskörper 50 geführt relativ zu dem Gehäuse 18 bewegbar ist.

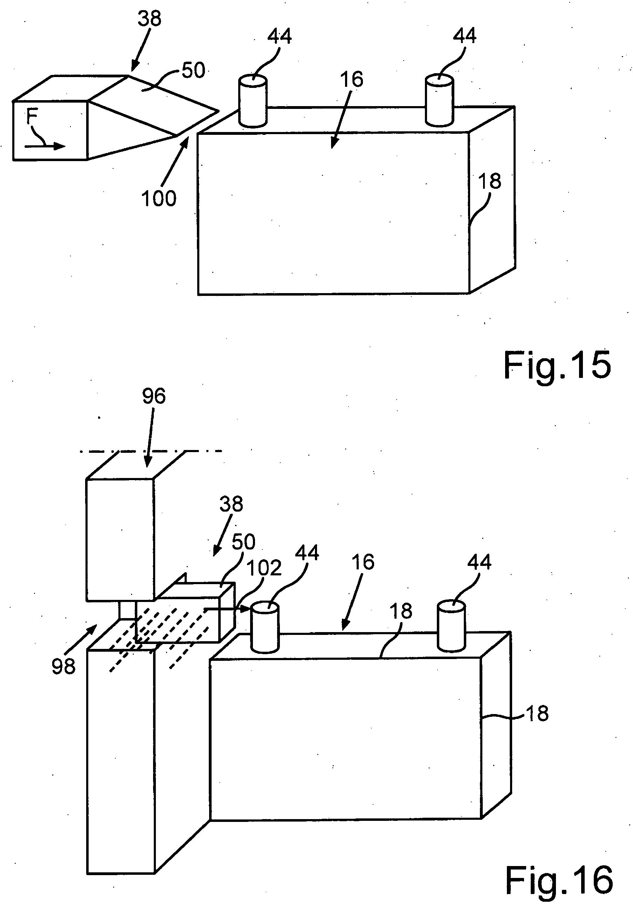

Fig. 15 veranschaulicht einen weiteren Wirkmechanismus zum Öffnen einer Batteriezelle 16. Als Intrusionskörper 50 ist ein zumindest im Wesentlichen keilförmiges Element vorgesehen, welches mit seiner Spitze 100 voran gegen das Gehäuse 18 bewegt und in dieses hineingedrückt wird. Dazu wird der Intrusionskörper 50 mit einer in Richtung der Batteriezelle 16 gerichteten und mit einem Kraftpfeil F angedeuteten Betätigungskraft beaufschlagt.

Fig. 16 zeigt eine weitere Möglichkeit zum Öffnen des Gehäuses 18 der Batteriezelle 16. Das Öffnungselement 38 umfasst einen zumindest im Wesentlichen quaderförmigen Intrusionskörper 50, welcher - wie durch einen Richtungspfeil 102 angedeutet ist - gegen einen der elektrischen Anschlüsse 44 bewegt wird. Dadurch reißt beispielsweise der elektrische Anschluss 44 vom Gehäuse 18 ab, wodurch das Gehäuse 18 aufgerissen und Austrittsöffnung ausgebildet wird. Das Öffnungselement 38 gemäß Fig. 16 umfasst das Führungselement 96 mit der Führung 98, entlang welcher der Intrusionskörper 50 geführt bewegbar ist.

Das Öffnungselement 38 kann auch auf Batterie-Module oder Batterie-Zusammenbauten angewendet werden, so dass beispielsweise eine Mehrzahl von Batteriezellen 16 geöffnet werden können.

Durch das gezielte Öffnen kann die Entstehung eines unerwünscht hohen Drucks im Aufnahmeraum 20 vermieden werden. Dadurch ist es beispielsweise möglich, unfallbedingte Deformationen der Batterie 14 zuzulassen, wodurch die Batterie 14 hinsichtlich ihres Bauraumbedarfs besonders klein und hinsichtlich ihres Gewichts besonders leicht ausgebildet werden kann. Insbesondere ist es nicht erforderlich, die Batterie 14 entsprechend zu panzern, um Deformationen und Intrusionen zu verhindern. Dadurch kann die Batterie 14 auch besonders kostengünstig ausgebildet werden. Ferner können auch etwaig, aus dem unerwünscht hohen Innendruck resultierende Effekte sowie aus dem Ausströmen des Elektrolyten resultierende Effekte vermieden werden.

## Patentansprüche

1. Kraftwagen (10), mit einer Batterie (14) zum Speichern von elektrischer Energie, welche wenigstens eine Batteriezelle (16) mit einem Gehäuse (18) mit einem Aufnahmeraum (20) umfasst, in dem ein Elektrolyt der Batterie (14) aufgenommen ist, und mit wenigstens einem Öffnungselement (38), mittels welchem (18) bei Erfülltsein wenigstens einer vorgebbaren Bedingung wenigstens eine Austrittsöffnung des Gehäuses (18) für den Elektrolyten ausbildbar ist, wobei wenigstens ein Sorbtionselement (40) zum Sorbieren des über die Austrittsöffnung aus dem Gehäuse (18) ausströmenden Elektrolyten vorgesehen ist,
wobei
das Öffnungselement (38) wenigstens ein Öffnungsteil (50) zum Ausbilden der Austrittsöffnung und einen Aktor umfasst, mittels welchem zum Ausbilden der Austrittsöffnung das Öffnungsteil (50) aus einer Ruhestellung in wenigstens eine Gebrauchsstellung antreibbar ist, sodass das Öffnungsteil (50) in Stützanlage mit dem Gehäuse (18) kommt und dieses unter gezieltem Ausbilden der Austrittsöffnung durchdringt, wobei das Öffnungsteil (50) in der Gebrauchsstellung teilweise in den Aufnahmeraum (20) hineinragt und teilweise über die Austrittsöffnung aus dem Aufnahmeraum (20) herausragt und wenigstens eine von dem Elektrolyten durchströmbare Durchgangsöffnung (92) aufweist, über welche der Elektrolyt in der Gebrauchsstellung des Öffnungsteils (50) aus dem Aufnahmeraum (12) an die Umgebung des Gehäuses (18) führbar ist, wobei wenigstens ein Sensor (26, 28, 30) zum Erfassen einer unfallbedingten Kraftbeaufschlagung des Kraftwagens (10) und eine mit dem Sensor (26, 28, 30) gekoppelte Steuereinheit (34) zum Empfangen eines die unfallbedingte Kraftbeaufschlagung charakterisierenden Signals vom Sensor (26, 28, 30) vorgesehen sind, wobei die Steuereinheit (34) dazu ausgelegt ist, in Abhängigkeit von dem empfangenen Signal die durch das Öffnungselement (38) zu bewirkende Ausbildung der Austrittsöffnung auszulösen, und wobei ein passives Öffnungselement (38) vorgesehen ist, welches einen Intrusionskörper (66) umfasst, der durch die unfallbedingte Kraftbeaufschlagung unter Ausbildung wenigstens einer Austrittsöffnung im Gehäuse (18) in die Batteriezelle (16) zu drücken ist.

2. Kraftwagen (10) nach Anspruch 1,
**dadurch gekennzeichnet, dass**
eine Wandung des Gehäuses (18), in welcher die Austrittsöffnung mittels des Öffnungselements (38) ausbildbar ist, insbesondere auf einer dem Aufnahmeraum (20) abgewandten Außenseite, zumindest bereichsweise mit dem Sorbtionselement (40) versehen ist.

3. Kraftwagen (10) nach einem der Ansprüche 1 oder 2,
**dadurch gekennzeichnet, dass**
das Sorbtionselement (40) an einem Wandungselement, insbesondere einem Bodenelement, des Kraftwagens angeordnet ist, an welchem die Batterie (14) abgestützt ist.

4. Kraftwagen (10) nach einem der vorhergehenden Ansprüche,
**dadurch gekennzeichnet, dass**
die mittels des Öffnungselements (38) auszubildende Austrittsöffnung und das Sorbtionselement (40) auf einer gemeinsamen Seite der Batterie (14) angeordnet sind.

5. Kraftwagen (10) nach einem der vorhergehenden Ansprüche,
**dadurch gekennzeichnet, dass**
die Austrittsöffnung mittels des Öffnungselements (38) infolge einer unfallbedingten Verlagerung des Öffnungselements (38) über einen vorgebbaren Weg relativ zur Batterie (14) ausbildbar ist.

6. Kraftwagen (10) nach einem der vorhergehenden Ansprüche,
**dadurch gekennzeichnet, dass**
der Aktor als ein pyrotechnischer Aktor ausgebildet ist.

## Claims

1. Motor vehicle (10) comprising a battery (14) for storing electrical energy, which battery comprises at least one battery cell (16) having a housing (18) with an accommodating space (20) in which an electrolyte of the battery (14) is accommodated, and comprising at least one opening element (38), by means of which (18) when at least one predefined condition is met at least one outlet opening of the housing (18) can be formed for the electrolyte, wherein at least one sorption element (40) is provided for sorbing the electrolyte flowing out of the housing (18) via the outlet opening, wherein the opening element (38) comprises at least one opening part (50) for forming the outlet opening and an actuator, by means of which, in order to form the outlet opening, the opening part (50) can be driven from a rest position into at least one use position so that the opening part (50) comes to bear against the housing (18) and penetrates the latter so as to form the outlet opening in a targeted manner, wherein the opening part (50) in the use position partially protrudes into the accommodating space (20) and partially protrudes out of the accommodating space (20) via the outlet opening and has at least one passage opening (92) through which the electrolyte can flow and via which the electrolyte in the use position of the opening part (50) can be guided out of the accommodating space (12) to the area surrounding the housing (18), wherein at least one sensor (26, 28, 30) is provided for detecting an accident-induced application of force on the motor vehicle (10) and a control unit (34) coupled to the sensor (26, 28, 30) is provided for receiving from the sensor (26, 28, 30) a signal characterising the accident-induced application of force, wherein the control unit (34) is designed to trigger the formation of the outlet opening, brought about by the opening element (38), as a function of the received signal, and wherein a passive opening element (38) is provided which comprises an intrusive body (66) which, due to the accident-induced application of force, is to be pressed into the battery cell (16) so as to form at least one outlet opening in the housing (18).

2. Motor vehicle (10) according to claim 1, **characterised in that** a wall of the housing (18), in which the outlet opening can be formed by means of the opening element (38), is provided with the sorption element (40) at least in some regions, in particular on an outer side facing away from the accommodating space (20).

3. Motor vehicle (10) according to any one of claims 1 or 2, **characterised in that** the sorption element (40) is arranged on a wall element, in particular a floor element, of the motor vehicle, on which the battery (14) is supported.

4. Motor vehicle (10) according to any one of the preceding claims, **characterised in that** the outlet opening, which is to be formed by means of the opening element (38), and the sorption element (40) are arranged on a common side of the battery (14).

5. Motor vehicle (10) according to any one of the preceding claims, **characterised in that** the outlet opening can be formed by means of the opening element (38) as a result of an accident-induced displacement of the opening element (38) by a predefinable distance relative to the battery (14).

6. Motor vehicle (10) according to any one of the preceding claims, **characterised in that** the actuator is configured as a pyrotechnic actuator.

## Revendications

1. Véhicule à moteur (10), comportant une batterie (14) pour stocker de l'énergie électrique, qui comprend au moins un élément de batterie (16) avec un boîtier (18) ayant un espace récepteur (20), dans lequel est reçu un électrolyte de la batterie (14), et au moins un élément d'ouverture (38), au moyen duquel (18), lorsqu'au moins une condition prédéterminable est satisfaite, au moins une ouverture de sortie du boîtier (18) peut être formée pour l'électrolyte, dans lequel il est prévu au moins un élément de sorption (40) pour absorber l'électrolyte s'écoulant hors du boîtier (18) via l'ouverture de sortie,
dans lequel :
l'élément d'ouverture (38) comprend au moins une partie d'ouverture (50) pour former l'ouverture de sortie et un actionneur, au moyen duquel, pour former l'ouverture de sortie, la partie d'ouverture (50) peut être actionnée d'une position de repos dans au moins une position de service de sorte que la partie d'ouverture (50) vienne en position d'appui avec le boîtier (18) et pénètre dans celui-ci dans le but de former l'ouverture de sortie, dans lequel la partie d'ouverture (50) en position de service pénètre en partie dans l'espace récepteur (20) et ressort en partie de l'espace récepteur (20) via l'ouverture de sortie et présente au moins une ouverture de passage (92) qui peut être parcourue par l'électrolyte, ouverture via laquelle l'électrolyte en position de service de la partie d'ouverture (50) peut être acheminé de l'espace récepteur (12) dans l'entourage du boîtier (18), dans lequel il est prévu au moins un capteur (26, 28, 30) pour détecter une application de force accidentelle du véhicule à moteur (10) et une unité de commande (34) couplée au capteur (26, 28, 30) pour recevoir du capteur (26, 28, 30) un signal caractérisant l'application de force accidentelle, dans lequel l'unité de commande (34) est conçue de manière à déclencher, en fonction du signal reçu, la formation de l'ouverture de sortie à effectuer par l'élément d'ouverture (38) et dans lequel il est prévu un élément d'ouverture passif (38) qui comprend un corps d'intrusion (66) qui doit être refoulé dans l'élément de batterie (16) lors de l'application de force accidentelle en formant au moins une ouverture de sortie dans le boîtier (18).

2. Véhicule à moteur (10) selon la revendication 1, **caractérisé en ce que** :
une paroi du boîtier (18), dans laquelle l'ouverture de sortie peut être formée au moyen de l'élément d'ouverture (38), peut être pourvue en particulier du côté extérieur opposé à l'espace récepteur (20), au moins par zones de l'élément de sorption (40).

3. Véhicule à moteur (10) selon l'une des revendications 1 ou 2,
**caractérisé en ce que** :
l'élément de sorption (40) est aménagé sur un élément de paroi, en particulier un élément de plancher, du véhicule à moteur, sur lequel la batterie (14) est supportée.

4. Véhicule à moteur (10) selon l'une quelconque des revendications précédentes,
**caractérisé en ce que** :
l'ouverture de sortie à former au moyen de l'élément d'ouverture (38) et l'élément de sorption (40) sont aménagés sur un côté commun de la batterie (14).

5. Véhicule à moteur (10) selon l'une quelconque des revendications précédentes,
**caractérisé en ce que** :
l'ouverture de sortie peut être formée au moyen de l'élément d'ouverture (38) à la suite d'un déplacement accidentel de l'élément d'ouverture (38) sur un trajet prédéterminable par rapport à la batterie (14).

6. Véhicule à moteur (10) selon l'une quelconque des revendications précédentes,
**caractérisé en ce que** :
l'actionneur se présente sous la forme d'un actionneur pyrotechnique.
